# NEW EUROPEAN PATENT SPECIFICATION

(11) **EP 2 373 773 B2**
(45) Date of publication and mention of the opposition decision: **14.09.2016**
(45) Mention of the grant of the patent: 28.11.2012
(21) Application number: 09778918.4
(22) Date of filing: 06.01.2009
(51) Int. Cl.: C11D 3/37, C11D 17/00, D06M 15/267, D06M 15/263, C08F 220/34, C08F 220/60

(54) **CATIONIC POLYMER THICKENERS**
KATIONISCH POLYMIERE VERDICKUNGSMITTEL
EPAISSISSANTS POUR POLYMÈRE CATIONIQUE

(43) Date of publication of application: 12.10.2011
(73) Proprietor: S.P.C.M. SA, 42160 Andrézieux Bouthéon (FR)
(72) Inventor: BLONDEL, Frédéric, F-42600 Lezigneux (FR)
(74) Representative: Cabinet Laurent & Charras
(86) International application number: PCT/EP2009/050077
(87) International publication number: WO 2010/078959

(56) References cited:
- EP-A- 0 343 840
- WO-A-90/12862
- FR-A- 2 589 145
- ANONYMOUS: "Cationic polymeric thickeners useful in fabric softeners" RESEARCH DISCLOSURE, MASON PUBLICATIONS, HAMPSHIRE, GB, vol. 429, no. 116, 1 January 2000 (2000-01-01), XP007125401 ISSN: 0374-4353 cited in the application

## Description

This invention relates to the technical field of cationic cross-linked polymers and their uses as a thickening agent.

### BACKGROUND OF THE INVENTION

Conventionally, most domestic of fabric softener compositions contain thickening agents to provide improvement in rheology profile.

Standard cationic polymeric thickeners are crosslinked water swellable polymers, such as those disclosed in WO 90/12862 (BP Chemicals), which discloses the use of lightly (5-45 ppm) cross-linked cationic thickeners, or US 2002/0132749 (Colgate-Palmolive Company) and Research Disclosure 429116, which disclose the use of heavily cross-linked cationic thickeners.

WO99/06455 relates to cationic homopolymers comprising 50 to 600 ppm of cross-linker, in a laundry softener. This homopolymer is preferably prepared by reverse emulsion polymerisation.

One drawback of fabric softener treatment is a gradual excess accumulation of fabric softeners ingredients on the surface of the fabric, especially after repeated use. This excess on the fabric bears a positive charge and tends to have a strong interaction with stain and soils that usually have a negative charge. This makes stains and soil more difficult to remove from fabrics and more easily re-deposited onto the fabric. Therefore, there is a need to minimize the negative effect of fabric softener ingredients on anti-redeposition to keep fabric integrity.

Despite the existence of a strong demand, the prior art has failed to provide adequate satisfaction regarding the problem of redeposition, i.e. resoiling of the material being washed by particles of dirt and fats during washing.

### DESCRIPTION OF THE INVENTION

It is an object of the present invention to provide effective polymeric thickeners having anti-redeposition benefits in the washing and after-treatment of textile goods.

We have found that this object is achieved by the use of a specific selection of polymeric thickeners as disclosed in the claims. Thanks to appropriate choice of conditions for polymerization (monomers used, concentration of active substance, crosslinking agent/chain transfer agent ratio), we have found a new cationic polymeric thickener exhibiting a low fraction of water soluble polymeric chains below about 25 percent by weight (of the total polymer), preferably below about 20 percent, and most preferably below about 15 percent, demonstrating an unexpectedly dramatic improvement in their inhibition of redeposition profiles. It is important to note that this new polymer differs from standard cationic polymeric thickeners used for solving the problem of redeposition which have all been found to exhibit a much higher fraction of water soluble polymers (> 30% by weight).

Furthermore, advantages are obtained in the overall performances in a fabric softening composition of the present invention versus a similar composition including standard cationic polymeric thickeners and more particularly, a higher stability upon aging and very good viscosifying properties.

In other words, the invention concerns a new cationic polymer thickener according to claim 1.

Advantageously, the cationic polymer thickener of the invention comprises less than 20% and most preferably less than 15 % of water soluble polymeric chain by total weight of the polymer.

Preferably, the cationic polymer thickener of the invention comprises a cross-linking agent concentration of from 750 ppm to 5000 ppm, more preferably from 1000 to 4500 ppm.

The polymeric thickeners of the invention are prepared in conventional water in oil emulsion by polymerising:
- at least one cationic monomer,
- and optionally other non-ionic and/or anionic monomers,
- in the presence of a cross-linking agent and optionally of a chain transfer agent.

According to the invention, the cross-linking agent concentration must be higher than about 500 ppm relative to the polymer, and preferably higher than about 750 ppm when the crosslinking agent used is the methylene bisacry-lamide, or concentrations of other cross-linking agents that lead to equivalent cross-linking levels from 10 to 10.000 ppm.

The subject polymeric thickeners are made by reverse phase polymerisation of the monomer or monomers blend in the presence of cross linker(s). They are formed from monoethylenically unsaturated monomer(s) that is either a water soluble cationic monomer or a blend of cationic monomers that may consist of:
- cationic monomer(s) alone,
- or may comprise a mixture of cationic monomer (or blend of cationic monomers) and from 0 to 50 moles % of non-ionic and/or anionic monomer(s).

Cationic monomers used for the invention are selected from the group consisting of the following monomers and derivatives and their quaternary or acid salts: dimethylaminopropylmethacrylamide, dimethylaminopropylacrylamide, diallylamine, methyldiallylamine, dialkylaminoalkyl-acrylates and methacrylates, dialkylaminoalkyl-acrylamides or-methacrylamides

Following is a non-restrictive list of monomers performing a non-ionic function: acrylamide, methacrylamide, N-Alkyl acrylamide, N-vinyl pyrrolidone, N-vinylformamide, N-vinyl acetamide, vinylacetate, vinyl alcohol, acrylate esters, allyl alcohol

Following is a non-restrictive list of monomers performing an anionic function: acrylic acid, methacrylic acid, itaconic acid, crotonic acid, maleic acid, fumaric acid, as well as monomers performing a sulfonic acid or phosphonic acid functions, such as 2-acrylamido-2-methyl propane sulfonic acid (ATBS) etc...

The monomers can also contain hydrophobic groups.

Following is a non-restrictive list of cross-linking agents: methylene bisacrylamide (MBA), ethylene glycol diacrylate, polyethylene glycol dimethacrylate, diacrylamide, triallylamine, cyanomethylacrylate, vinyl oxyethylacrylate or methacrylate and formaldehyde, glyoxal, compounds of the glycidyl ether type such as ethyleneglycol diglycidyl ether, or the epoxydes or any other means familiar to the expert permitting cross-linking.

By way of preeminent preference the cross-linking rate preferably ranges from 800 to 5000 ppm (on the basis of MBA) relative to the polymer or equivalent cross-linking with a cross-linking agent of different efficiency.

As described in US 2002/0132749 and Research Disclosure 429116, the degree of non-linearity can additionally be controlled by the inclusion of chain transfer agents (such as isopropyl alcohol, sodium hypophosphite, mercaptoethanol...) in the polymerisation mixture in order to control the polymeric chain's length and the cross-linking density.

It is understood that it is essential according to the invention that the polymer be prepared by means of a reverse phase oil-in-water emulsion polymerization. This means that when polymerized, the aqueous monomer(s) is emulsified into a suitable oil phase, in the presence of a water-in-oil emulsifier. Emulsifiers, polymeric stabilisers, non-aqueous liquids and other reverse phase polymerisation materials and process details are described in, for instance, EP 126528.

It is well known that the reverse phase emulsion so obtained can be dehydrated and the resulting polymeric thickener concentration in the reverse emulsion is between 15 to 65 percent by weight.

The liquid product resulting from the emulsion polymerisation is generally used as such, without separation of the polymer particles from it, but if desired dried polymer particles may be isolated by all known techniques. Those processes are consisting of isolating the active matter (i.e.: the polymer) from other constituents of the emulsion. Processes such as the following may be cited:
- precipitation in a non-solvent medium such as acetone, methanol, and other polar solvents,
- simple filtration then permits isolation of the polymer particle,
- azeotropic distillation in the presence of an agglomerating agent and stabilizing polymer which makes it possible to obtain agglomerates which are easily isolated by filtration before drying of the particle is undertaken,
- "Spray drying," or drying by atomization or pulverization, this process consists of creating a cloud of fine droplets of emulsion in a stream of hot air for a controlled period.

When the polymer-in-oil emulsion that results from reverse phase polymerisation is used as such and directly added to watertoform an aqueous composition, it is done in conventional mannerin the presence of oil-in-water emulsifier.

The expert will understand optimization of the polymerization conditions by reading this description and because of his individual knowledge, or as a result of simple routine tests, such that the final polymer has a water-soluble polymer fraction ranging below about 25 % by weight of the total polymer (as determined by a metering method such as that described on page 8 of patent EP 343840).

The expert will know in particular how to estimate, on the basis of his own knowledge, the amount of chain transfer agent and cross-linking to be used in order to obtain a final polymer having an adequate fraction of water-soluble polymer and the desired rheology.

### EXAMPLES

### Example 1:

### A) Synthesis of the cationic polymer. This example illustrates the preparation of a suitable cationic polymer.

An aqueous phase of water soluble polymer is prepared by admixing together the following components:
- 47.0 parts of methyl chloride quaternised dimethylaminoethylmethacrylate
- 6.0 parts of acrylamide
- 0.03 part penta sodium diethylene triamine penta acetic acid
- 14 parts of water,
- 0.03 part of methylene-bis-acrylamide,
- 0.4 part of sodium formiate,
- pH is adjusted between [4.0 - 6.0] with citric acid

An oil phase is prepared by admixing together the following components:
- 2.0 parts of sorbitan mono-oleate,
- 5.5 parts of a polymeric stabiliser,
- 19.0 parts of white mineral oil
- 6.0 parts of dearomatised hydrocarbon solvent

The two phases are mixed together in a reactor in a ratio of 1 part oil phase to 1 part aqueous phase under high shear to form a water-in-oil emulsion Then this water in oil emulsion is sparged with nitrogen to remove oxygen.

Polymerisation is run by addition of a redox couple of sodium metabisulphite and tertiary butyl hydroperoxide in solution in water.

After rising the maximum temperature (adiabatic polymerisation), the emulsion is held at 65°C for 60 minutes.

Vacuum distillation is carried out to remove water and volatile solvent to give a final product of 58% polymer solids.

The last step consists in adding oil in water emulsifier to make the liquid dispersion ready to use. To 100 parts of distilled product 6.0 parts of ethoxy-lated fatty alcohol are added.

### B) Viscosity measurement

A polymer solution is prepared at 1.0% (as is) by pouring 5 g of liquid dispersion (described above) in 500 g of water under stirring (200 rpm, 3 blades impeller) for 15 5 minutes.

Viscosity is measured with Brookfield Viscosimeter RVT, 10 rpm

### C) Percent Solubles (EP 343 840)

This method is based on the separation of cross linked polymer microgels from a solution of polymer by centrifugation. The polymer content before and after centrifugation is determined by colloid titration, based on the stoi-chiometric precipitation of charged colloidal particles by titration with oppositely charged polymer using a visual indicator.

About 20 grams of a dispersion of the polymer in non-aqueous liquid is accurately weighed and added to 200 ml acetone with stirring at room temperature. Stirring is continued for 5 minutes and then the precipitated polymer is filtered through no.1 filter paper, air dried for 1 hour in drying oven then dried at 50°C for 2 hours, cooled in a dessicator and weighed. The percentage of polymer in the starting dispersion can thus be calculated.

Enough of this dispersion is added to deionised water with stirring to produce about 200g viscous paste containing 0.5% by weight polymer. This is stirred at about 500 rpm for 45 minute using 3 blades impeller.

To 40 grams of this paste are added 210 g deionised water containing dissolved therein 1.0 g sodium chloride and the mixture is carefully mixed for 5 minutes to reduce the viscosity for centrifugation.

Nalgene centrifuge tubes are filled and balanced by weighing with the polymer solution (using about 40ml) and centrifuged for 1.5 hours (15300 rpm).The top 5 g of supernatant polymer solution are carefully pipetted off. The supernatant polymer solution and a sample of the entire aqueous composition prior to centrifugation are subjected to colloid titration to determine the amount of soluble polymer in the supernatant liquor after centrifuging. Thus it gives a value for the percentage of soluble polymer in the initial polymer.

The colloid titration is performed as follows:
- Potassium polyvinyl sulphate (PVSK): 0.0025N solution.
- Chlorhydric acid: 0.1 N solution to adjust.
- Toluidine blue indicator: 0.1% solution.

Titration is run on polymer solution acidified with chlorhydric acid (pH about 4) and coloured with 2-3 droplet of blue indicator. PVSK is added slowly until the colour turns from blue to violet.

% of solubles is then determined according to volume of PVSK measured at equilibrium, polymer weight, corresponding dilution and reagents molarity.

### D) Redeposition profile

The polymers were evaluated for redeposition properties as follows:

Soil redeposition performance was measured in a standard multi-wash test. Conditions which result in high carryover of main-wash liquor into the final rinse have been found to be most sensitive to soil redeposition effects. Particularly sensitive are wash conditions where only one rinse is used. Thus, a top loading automatic washing machine was used, which utilised only a single rinse.

Clean ballast load (white cotton terry) was added to the washing machine and soil added to the wash in the form of standard soil ballast fabrics comprising a mixture of SBL2004 standard soil ballast cloths and proprietary soil ballast cloths. Five cloths of each type were added giving a total soil loading per wash of approximately 80g.

A commercially available detergent formulation (Omo Multi Acao) was added to the main wash at the recommended dosage. Treatment compositions, comprising polymers in accordance with the invention, were dosed into the final rinse, at standard dosage.

Visual observation was used to assess the unevenness of the soil deposition : ± or - signs allow to compare and classify each piece of fabric

### EXAMPLES 2-5

Example 1 is reproduced in changing cross linker and chain transfert amount. All the results are summarised in table 1.

**Table 1**

| Examples | 1 | 2 | 3 | 4 US 2002/0132749 | 5 WO 90/12862 |
|---|---|---|---|---|---|
| Cross linker in part | 0.03 (800 ppm) | 0.04 (1200ppm) | 0.02 (500 ppm) | 0.006 (150 ppm) | 0.002 (45 ppm) |
| Chain transfert in part | 0.04 | 0.03 | 0.04 | 0.01 | 0 |
| Viscosity at 1% | 13000 cps | 18000 cps | 6000 cps | 3000 cps | 1500 cps |
| % of soluble | 12.8% | 8.2% | 48.0% | 62.4% | 80.6% |
| Anti redep profile | +++ | +++ | - | -- | ------- |

## Claims

1. Cationic polymer thickener consisting of a crosslinked water swellable cationic polymer formed, by reverse phase water in oil emulsion polymerization, from at least one monoethylenically unsaturated water soluble cationic monomer and optionally from 0 to 50 moles % of non-ionic and / or anionic monoethylenically unsaturated monomers in the presence of cross-linking agent(s), wherein said cationic polymer thickener has a water soluble polymeric fraction of less than 25% by weight of the total polymer, and a cross-linking agent concentration of from 500 ppm to 5000 ppm relative to the polymer.

2. Cationic polymer thickener according to claim 1, wherein said polymer comprises less than 20% and most preferably less than 15 % of water soluble polymeric chain by total weight of the polymer.

3. Cationic polymer thickener according to claim 1, wherein said polymer comprises a cross-linking agent concentration of from 750 ppm to 5000 ppm, more preferably from 1000 to 4500 ppm.

4. Cationic polymer thickener according to claim 1, wherein cationic monomers are selected from the group consisting of the following monomers and derivatives and their quaternary or acid salts: dimethylaminopropylmethacrylamide, dimethylaminopropylacrylamide, diallylamine, methyldiallylamine, dialkylaminoalkyl-acrylates and methacrylates, dialkylaminoalkyl-acrylamides or - methacrylamides.

5. Cationic polymer thickener according to claim 1, wherein non-ionic monomers are selected from the group consisting of acrylamide, methacrylamide, N-Alkyl acrylamide, N-vinyl pyrrolidone, N-vinyl formamide, N-vinyl acetamide, vinylacetate, vinyl alcohol, acrylate esters, allyl alcohol.

6. Cationic polymer thickener according to claim 1, wherein anionic monomers are selected from the group consisting of acrylic acid, methacrylic acid, itaconic acid, crotonic acid, maleic acid, fumaric acid, as well as monomers performing a sulfonic acid or phosphonic acid functions, such as 2-acrylamido-2-methyl propane sulfonic acid (ATBS).

7. Cationic polymer thickener according to claim 1, wherein cross-linking agents selected from the group consisting of methylene bisacrylamide (MBA), ethylene glycol diacrylate, polyethylene glycol dimethacrylate, diacrylamide, triallylamine, cyanomethylacrylate, vinyl oxyethylacrylate or methacrylate and formaldehyde, glyoxal, compounds of the glycidyl ether type such as ethyleneglycol diglycidyl ether, or the epoxydes.

## Patentansprüche

1. Kationischer Polymerverdicker, der aus einem vernetzten, wasserquellfähigen kationischen Polymer besteht, das durch Umkehrphasenpolymerisation in einer Wasser-in-Öl-Emulsion aus mindestens einem wasserlöslichen, monoethylenisch ungesättigten, kationischen Monomer und wahlweise von 0 bis 50 Mol% nichtionische und/oder anionische monoethylenisch ungesättigte Monomeren in Gegenwart eines (von) Vernetzungsmittels(n) hergestellt ist, wobei der kationische Polymerverdicker einen wasserlöslichen Polymeranteil von weniger als 25 Gew.-% des gesamten Polymers und eine Vernetzungsmittelkonzentration von 500 ppm bis 5000 ppm in Bezug auf das Polymer hat.

2. Kationischer Polymerverdicker nach Anspruch 1, wobei das Polymer weniger als 20% und am bevorzugtesten weniger als 15% einer wasserlöslichen Polymerkette pro Gesamtgewicht des Polymers umfasst.

3. Kationischer Polymerverdicker nach Anspruch 1, wobei das Polymer eine Vernetzungsmittelkonzentration von 750 ppm bis 5000 ppm, bevorzugter von 1000 bis 4500 ppm umfasst.

4. Kationischer Polymerverdicker nach Anspruch 1, wobei die kationischen Monomere aus der Gruppe ausgewählt sind, die aus den folgenden Monomeren und Derivaten und ihren quaternären oder Säuresalzen besteht: Dimethylaminopropylmethacrylamid, Dimethylaminopropylacrylamid, Diallylamin, Methyldiallylamin, Dialkylaminoalkyl-Acrylaten und -Methacrylaten, Dialkylaminoalkyl-Acrylamiden oder -Methacrylamiden.

5. Kationischer Polymerverdicker nach Anspruch 1, wobei die nichtionischen Monomere aus der Gruppe ausgewählt sind, die aus Acrylamid, Methacrylamid, N-Alkylacrylamid, N-Vinylpyrrolidon, N-Vinylformamid, N-Vinylacetamid, Vinylacetat, Vinylalkohol, Acrylatestern, Allylalkohol besteht.

6. Kationischer Polymerverdicker nach Anspruch 1, wobei die anionischen Monomere aus der Gruppe ausgewählt sind, die aus Acrylsäure, Methacrylsäure, Itaconsäure, Crotonsäure, Maleinsäure, Fumarsäure sowie Monomeren besteht, die Sulfonsäure- oder Phosphonsäurefunktionen erfüllen, wie etwa 2-Acrylamid-2-Methylpropansulfonsäure (ATBS).

7. Kationischer Polymerverdicker nach Anspruch 1, wobei die Vernetzungsmittel aus der Gruppe ausgewählt sind, die aus Methylenbisacrylamid (MBA), Ethylenglycoldiacrylat, Poylethylenglycoldimethacrylat, Diacrylamid, Triallylamin, Cyanomethylacrylat, Vinyloxyethyl-Acrylat oder -Methacrylat und Formaldehyd, Glyoxal, Verbindungen der Glycidyletherart, wie etwa Ethylenglycol-Diglycidylether, oder den Epoxiden besteht.

## Revendications

1. Polymère cationique épaississant composé d'un polymère cationique réticulé gonflable dans l'eau, formé, par polymérisation en émulsion eau dans huile en phase inverse, à partir d'au moins un monomère cationique hydrosoluble monoéthylèniquement insaturé et éventuellement de 0 à 50 mol% de monomères non ionique et/ou anioniques monoéthylèniquement insaturés en présence d'agent(s) réticulant, dans lequel ledit polymère cationique épaississant a une proportion de polymères solubles dans l'eau inférieure à 25% du poids du polymère complet, et une concentration en agent réticulant comprise entre 500 ppm et 5000 ppm par rapport au polymère.

2. Polymère cationique épaississant selon la revendication 1, dans lequel ledit polymère comprend moins de 20% et plus préférentiellement moins de 15% de chaines polymériques solubles dans l'eau rapporté au poids total du polymère.

3. Polymère cationique épaississant selon la revendication 1, dans lequel ledit polymère comprend une concentration en agent réticulant comprise entre 750 ppm et 5000 ppm, plus préférentiellement comprise entre 1000 ppm et 4500 ppm.

4. Polymère cationique épaississant selon la revendication 1, dans lequel les monomères cationiques sont choisis dans le groupe constitué des monomères suivants et leurs dérivés et leurs sels quaternaires ou leurs sels acides : le diméthylaminopropylméthacrylamide, le diméthylaminopropylacrylamide, la diallylamine, la méthyldiallylamine, les acrylates et méthacrylates de dialkylaminoalkyl, les acrylamides ou méthacrylamides de dialkylaminoalkyl.

5. Polymère cationique épaississant selon la revendication 1, dans lequel les monomères non ioniques sont choisis dans le groupe constitué de l'acrylamide, la méthacrylamide, le N-alkylacrylamide, la N-vinylpyrrolidone, le N-vinyl formamide, le N-vinyl acétamide, l'acétate de vinyl, l'alcool vinylique, les esters d'acrylates et l'alcool allylique.

6. Polymère cationique épaississant selon la revendication 1, dans lequel les monomères anioniques sont choisis dans le groupe constitué de l'acide acrylique, l'acide méthacrylique, l'acide itaconique, l'acide crotonique, l'acide maléique, l'acide fumarique, tout comme les monomères remplissant une fonction d'acide sulfonique ou d'acide phosphonique, comme l'acide 2-acrylamido-2-methyl propane sulfonique (ATBS).

7. Polymère cationique épaississant selon la revendication 1, dans lequel les agents réticulants sont choisis dans le groupe constitué du méthylènebisacrylamide (MBA), l'éthylène glycol diacrylate, le polyéthylène glycol diméthacrylate, le diacrylamide, la triallylamine, le cyanométhylacrylate, l'oxyéthylacrylate vinylique ou le métracrylate et formaldéhyde, du glyoxal, de composés du type éther glycidylique comme l'éthylèneglycol diglycidyle éther ou les époxydes.
